# EUROPEAN PATENT SPECIFICATION

(11) **EP 1 632 141 B1**
(45) Date of publication and mention of the grant of the patent: **28.04.2010**
(21) Application number: 05077018.9
(22) Date of filing: 02.09.2005
(51) Int. Cl.: A23N 15/04, A23N 15/01

(54) **Vorrichtung zum Säubern von Sprossen**
Device for cleaning sprouts
Dispositif pour nettoyer des croisillons

(30) Priority: 06.09.2004 NL 1026980
(43) Date of publication of application: 08.03.2006
(73) Proprietor: Tumoba B.V., 2991 VC Barendrecht (NL)
(72) Inventor: Molenaar, Hendrik Willem, 2992 HN Barendrecht (NL)
(74) Representative: Reynvaan, Lambertus Johannes

(56) References cited:
- EP-A- 1 197 307
- FR-A- 2 102 928
- US-A- 4 985 956

## Description

The present invention relates to a device for cleaning sprouts according to the preamble of claim 1 such a device is shown in US 4985956.

In today's society, there is an increasing demand for products which can be offered to the consumer in ready prepared form. In line with this trend, a need to be able to also offer ready cleaned sprouts to the consumer has thus developed.

Sprouts grow on stalks to which they are attached by stems. When the sprouts are being harvested using conventional apparatus, they are cut from the stalks, in which case a small portion of the stem always remains on the sprouts. Before the sprouts are consumed, they are cleaned by cutting the stem off the sprout, thereby also removing the outer leaves of the sprout.

It is an object of the present invention to provide a device with which the sprouts can be cleaned for consumption in an efficient manner.

This object is achieved by a device which has the characteristics of the characterizing clause of Claim 1.

The sprouts to be cleaned are positioned in the desired position in the positioning station A, each sprout being able to assume one of two possible positions. Station B is used to detect which of the two possible positions each sprout assumes and the cutting station C and the ejector station D are operated on the basis of the data obtained in station B.

According to the invention, the positioning station A is formed by a section of the roller conveyor, the individual rollers being profiled in such a manner that, between in each case adjoining rollers, a row of accommodating spaces is formed which can each accommodate one sprout, the individual rollers being caused to rotate, as a result of which the sprouts accommodated in the accommodating spaces will start to rotate about their longest axis, thus aligning the latter parallel to the rollers, means being arranged above the roller conveyor for removing those sprouts which did not end up in the accommodating spaces. In this manner, the longest axis of the sprouts, i.e. the axis extending through the stem, is aligned parallel to the rollers, thus enabling the sprout to be in two possible positions in the accommodating space.

According to the invention, the scanning station B comprises a housing through which in each case a number of rollers move which carry along a corresponding number of rows of sprouts, in which housing a camera is fitted which records a number of images of the rows of sprouts present in the housing; the camera is connected to a computer unit which determines the position of each sprout using the images obtained.

The computer unit records the colour deviation of each sprout at both ends thereof and determines the position of the respective sprout by comparing the colour deviation at both ends.

The invention will be explained in more detail with reference to the appended drawings, in which:
Fig. 1 shows a diagrammatic side view of the device;
Fig. 2 shows a partial section along line II-II of Fig. 1;
Fig. 3 shows a partial top view of two adjoining rollers with sprouts accommodated between them;
Fig. 4 shows a section along line IV-IV of Fig. 1.

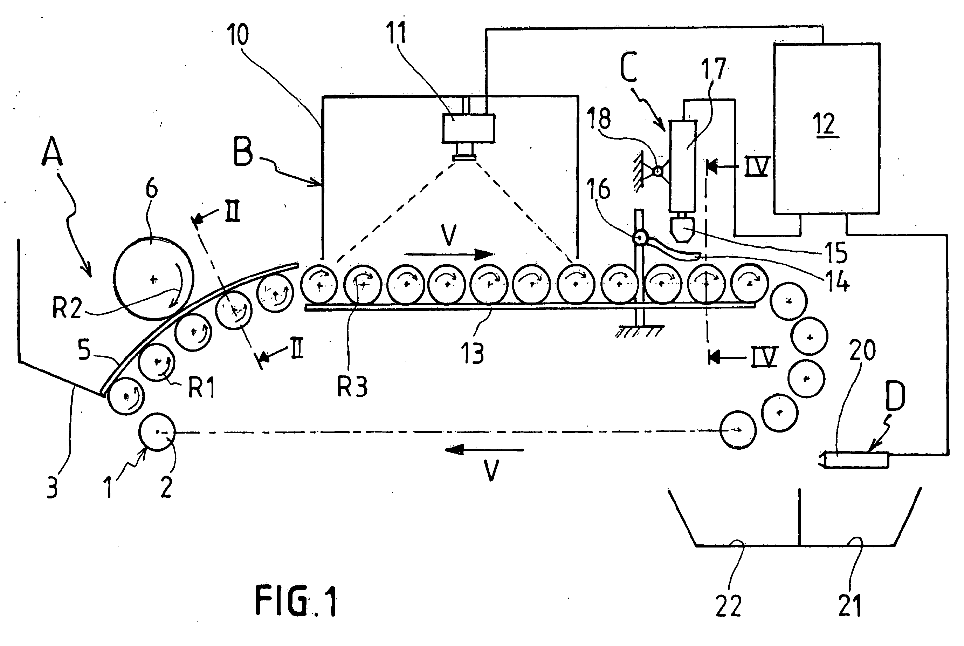

Fig. 1 diagrammatically shows a side view of the total device for cleaning sprouts according to the invention. This figure shows a continuous roller conveyor 1, the individual identical rollers 2 of which are mounted so as to be able to rotate freely in chains (not shown) which are arranged on both sides of these rollers and which can be advanced in the direction of the arrows V by means of a suitable drive mechanism.

In the figure, the upper part of the roller conveyor 1 moves from the left to the right and a number of processing units are arranged along this section of the roller conveyor in order to make the sprouts ready for consumption. Thus, this section of the roller conveyor has a first station A, where the sprouts are placed on the roller conveyor and positioned in one of two possible positions, a second station B, where the sprouts positioned on the roller conveyor are scanned in order to determine which of the two possible positions each sprout has assumed, a third station C, where the sprouts are cut on the basis of the data determined in station B, and a station D, where the sprouts whose position could not be determined sufficiently accurately by the computer unit are ejected.

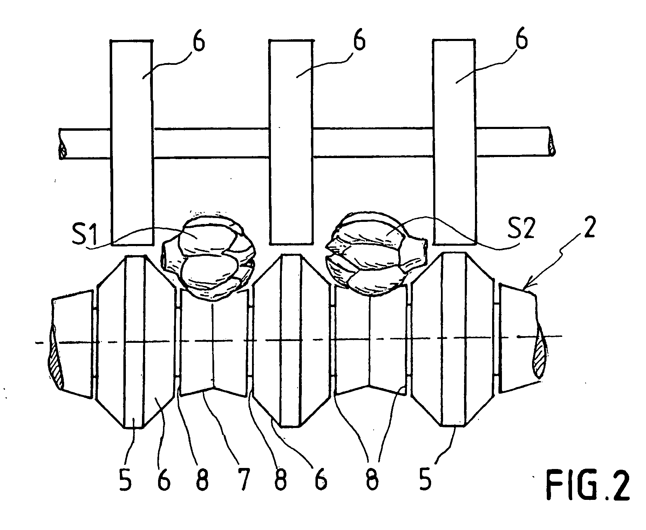

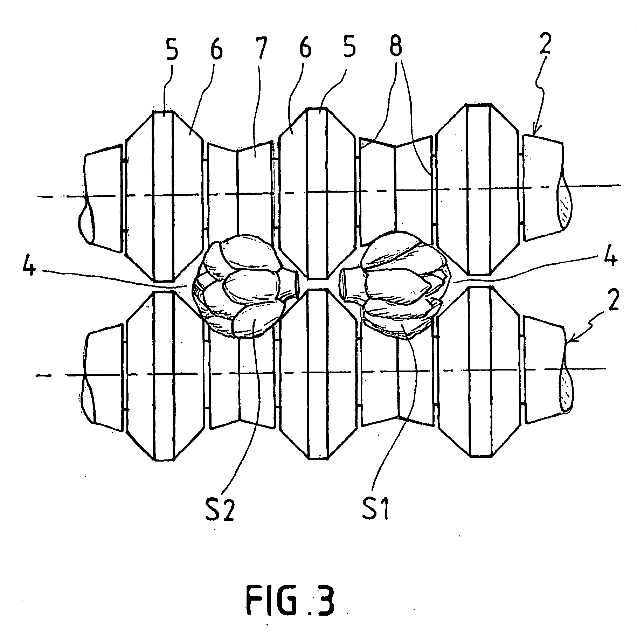

On the left-hand side of the roller conveyor, there is a collecting funnel 3, to which the sprouts which are to be processed and have previously been sorted according to specific sizes are fed. The roller conveyor joins onto this collecting funnel so that the sprouts coming from the collecting funnel land on the roller conveyor. As Figs. 2 and 3 clearly show, the individual rollers 2 of the roller conveyor are profiled in such a manner that a number of accommodating spaces 4 are formed between in each case two adjoining rollers, each of which accommodating spaces 4 can accommodate a sprout to be processed. In the practical embodiment of the device described here, in each case six accommodating spaces are formed between two adjoining rollers, so that in each case a row of six adjacent sprouts can be accommodated between two rollers.

As Figs. 2 and 3 show, the accommodating spaces 4 for the sprouts between two adjoining rollers are formed by opposite regions of these rollers having a relatively small diameter. Regions 5 with maximum diameter are in each case situated between the former regions.

From these regions with maximum diameter, the diameter initially decreases sharply, resulting in relatively steep slopes 6. These steep slopes run into a substantially cup-shaped surface 7, which is much flatter than the slopes 6 and forms the actual bearing surface for the sprout to be accommodated. At the two opposite ends of this bearing surface 7, i.e. near the transitions of the surface 7 to the steep slopes 6, narrow, deep slots 8 have been made over the circumference of the roller, the purpose of which will be discussed below.

The section of the roller conveyor 1 joining onto the collecting funnel 3 forms the pick-up and positioning station A for the sprouts, one sprout being placed in each accommodating space 4 if possible. In this part of the roller conveyor, the individual rollers run over a fixed running surface 5 arranged above the rollers, so that the individual rollers in this station A rotate in the direction of the arrows R1. Any sprouts landing outside the accommodating spaces 4 will come into contact with the row of discs 6 which are at some distance above the roller conveyor and rotate in the direction of arrow R2. As can be seen in Fig. 2, the outer circumference of the discs 6 is situated a small distance above the outer circumference of the rollers 2, and in each case above the region 5 thereof with the maximum diameter. Thus, there are five discs 6 of this type in the present embodiment and the sprouts coming into contact with these discs are returned to the collecting funnel 3 by these discs.

By the end of the positioning station A, if possible all the accommodating spaces 4 formed between the adjoining rollers contain a sprout. Since the rollers 2, in addition to their advancing movement, also execute a rotation R1 about their longitudinal axis, the sprouts placed in the accommodating spaces 4 will undergo a rotation. As a result of this rotation and the design of the accommodating spaces, the accommodated sprouts will automatically assume a position in which their longest axis, which forms the axis of rotation of the sprouts, runs parallel to the longitudinal direction of the rollers 2. The longest axis of the sprouts is the axis which runs through the stem and thus there are two possible positions for the sprout in the accommodating space, that is to say with the stem on the right (S2) or with the stem on the left (S1). In Figs. 2 and 3, both possibilities are illustrated, but it will be clear that it remains pure coincidence which of the two possible positions a sprout will assume in each accommodating space.

The scanning station B joins onto the positioning station A, which station B is formed by a housing 10, in which a camera 11 is placed. The housing 10 can accommodate six rows of six sprouts at any one time. The camera in each case records an image of all the sprouts present in the housing when a new row of sprouts has entered the housing (and thus another row has left the housing). Each row of sprouts is thus photographed six times by the camera while it is passing through the housing. The camera is connected to a computer 12 which processes the recorded images of the sprouts. The computer detects the colour deviation at both ends of each sprout. If the computer establishes that a sprout has a greater degree of colour deviation at one end than at the other, the computer determines that the stem is at the end having the greater degree of colour deviation. If the computer is unable to determine a significant difference in colour deviation, the sprout is classified as 'neutral'. Effectively, station B tries to determine which of the two possible positions each sprout has assumed.

Inside station B, the freely rotating rollers 2 run over a running surface 13 which is situated under the rollers 2, so that, in station B, the rollers rotate in the direction of the arrows R3, which is opposite to that in the preceding station A. The sprouts situated between the rollers thus also rotate in the opposite direction. When a row of sprouts leaves the station B, the positioning of each sprout in this row is known, or the sprout has been classified as neutral.

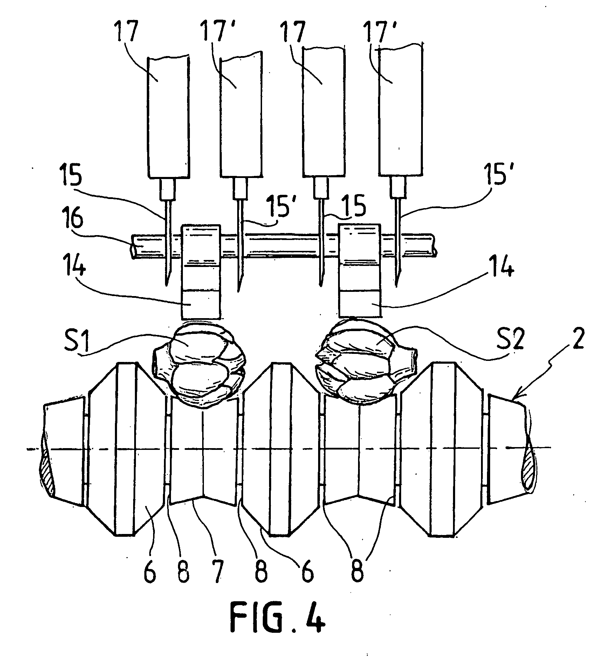

Station C joins onto station B, in which station C the sprouts are cut, that is to say the stem of each sprout is cut away, together with the outermost leaves. To this end, the station C comprises a row of pressure fingers 14 and a row of vertically displaceable knives 15, 15', as illustrated diagrammatically in Fig. 4.

A fixed horizontal shaft 16 is arranged at some distance above the roller conveyor, on which shaft a number of pressure fingers 14 extending in the direction of movement of the roller conveyor are arranged, in each case one finger at the location of an accommodating space 4 between the rollers. Each pressure finger is rotatably attached to the shaft 16 at one end and is under pressure from a spring which presses the pressure finger down, so that the finger is pressed against a stop (not shown) in such a manner that the free end of the finger is situated a small distance above the local external surface of the rollers 2. The surface on the end of the fingers and facing the rollers 2 is smooth and slightly bent so that each sprout situated in the accommodating space between two adjoining rollers 2 touches the free end of the respective finger and moves this finger upwards counter to the spring pressure. The sprout effectively moves along under the finger while rotating or, in other words, the sprout is pressed firmly into position in the respective accommodating space by the pressure finger.

As Fig. 4 illustrates, each accommodating space 4 has two vertically displaceable knives 15, 15' associated with it, which are arranged on either side of the pressure finger 14. Each of the knives is situated in the plane of a slot 8, so that each knife moves partway into the respective slot when it is moved down. The position of the sprouts located under the row of knives has been determined in the preceding station B, i.e. it is known whether the stem of the sprout is pointing to the right or to the left. In Fig. 4, the sprout S1 is shown with the stem pointing to the left and the adjoining sprout S2 is shown with the stem pointing to the right. In the case of sprout S 1, therefore, the left-hand knife 15 will be actuated, as a result of which the latter will move down and cut off the stem. In contrast, in the case of sprout S2, the right-hand knife 15' will move down and cut off the stem. The knives 15, 15' of each accommodating space are actuated by a pneumatic cylinder 17, 17'. These cylinders are in turn controlled by a computer unit 12, in which the position of the sprouts accommodated in the respective accommodating spaces 4 is determined and stored. If a sprout has been classified as 'neutral', neither of the two knives is actuated and this sprout leaves the station C without undergoing any treatment.

As can be seen in Fig. 1, the running surface 13 also extends past the cutting station C, so that the rollers 2 and therefore the sprouts in this station rotate in the same direction as in station B. Moreover, this figure shows that the pneumatic cylinders 17, 17' are suspended at 18 such that they can pivot slightly, so that these cylinders 17, 17' and thus the knives 15 can move along to some degree with the direction of movement V of the sprouts while the stems are being cut off.

An ejector station (D) is arranged downstream of the cutting station (C) in the direction of movement of the roller conveyor, which ejector station comprises a row of nozzles 20 for compressed air. The nozzles are arranged near the turning point where the roller conveyor is diverted downwards to the bottom return section. At this turning point, the individual rollers are not driven and the sprouts in the accommodating spaces fall into a collecting tray 21 by the force of gravity. If a sprout has been classified in the scanning station B as 'neutral' and thus has not undergone any cutting treatment, the nozzle associated with this accommodating space will emit a blast of air as soon as the sprout falls out of the accommodating space. As a result, this sprout is forced to the left in Fig. 1 and, rather than in collecting tray 21, lands in collecting tray 22 which is situated to the left thereof.

It will be clear that the present invention is not limited to the embodiment described and illustrated here, but that numerous variants and modifications are possible without departing from the scope of the appended claims.

## Claims

1. Device for cleaning sprouts which have been sorted according to size comprising a roller conveyor for conveying the sprouts, along which roller conveyor, in the direction of movement thereof, a number of processing stations for the sprouts are arranged, **characterized in that** the processing stations are successively formed by:
- a positioning station (A) in which the sprouts assume one of two possible positions;
- a scanning station (B) which determines which of the two possible positions the sprout has assumed and stores this information in a computer unit (12);
- a cutting station (C) in which the sprouts are cut using the data stored in the computer unit (12); and
- an ejector station (D) in which the sprouts whose position could not be determined sufficiently accurately are ejected.

2. Device according to Claim 1, **characterized in that** the positioning station (A) is formed by a section of the roller conveyor (1), the individual rollers (2) being profiled in such a manner that, between in each case adjoining rollers, a row of accommodating spaces (4) is formed which can each accommodate one sprout, the individual rollers being caused to rotate, as a result of which the sprouts accommodated in the accommodating spaces will start to rotate about their longest axis, thus aligning the latter parallel to the rollers, means (6) being arranged above the roller conveyor for removing those sprouts which did not end up in the accommodating spaces.

3. Device according to Claim 2, **characterized in that** the means (6) for removing the sprouts which did not end up in the accommodating spaces are formed by a row of rotating discs (6), the circumference of each disc being at some distance from the outer circumference of the rollers, namely in the region (5) thereof between the said accommodating spaces (4).

4. Device according to Claim 1, 2 or 3, **characterized in that** the scanning station (B) comprises a housing through which in each case a number of rollers move which carry along a corresponding number of rows of sprouts, in which housing a camera (11) is fitted which records a number of images of the rows of sprouts present in the housing, the camera is connected to a computer unit (12) which determines and stores the position of each sprout using the images obtained.

5. Device according to Claim 4, **characterized in that** the computer unit (12) records the colour deviation of each sprout at both ends thereof and determines the position of the respective sprout by comparing the colour deviation at both ends.

6. Device according to one or more of the preceding Claims 1-5, **characterized in that** the cutting station (C) comprises a row of retaining elements (14) for retaining a row of sprouts coming out of the station (B) in the said accommodating spaces (4), **in that** a row of knives (15, 15') is present, two vertically displaceable knives being present for each accommodating space, which knives are spaced apart in the longitudinal direction of the rollers (2) and are each connected to an operating element (17, 17') which is controlled by the said computer unit (12).

7. Device according to Claim 6, **characterized in that** each roller (2) in each region which forms an accommodating space (4) is provided with two narrow slots (8) extending over the circumference, each of which is situated in the vertical plane of movement of a knife (15, 15'), so that the knife can move partway into the respective slot when it is moved down.

8. Device according to Claim 7, **characterized in that** each region of the roller which forms an accommodating space comprises a section with a relatively small diameter, the diameter decreasing sharply from the regions (5) with maximum diameter, resulting in relatively steep slopes (6), between which a flat, substantially cup-shaped bearing surface (7) for the sprout is situated, and the slots (8) being situated at the transition between the steep slopes (6) and the bearing surface (7).

9. Device according to one or more of the preceding claims, **characterized in that** the ejector station (D) comprises a row of nozzles (2) for compressed air, which nozzles are arranged downstream of the cutting station (C), near the turning point of the roller conveyor, and each nozzle is arranged near an accommodating space.

10. Device according to one or more of the preceding claims, **characterized in that**, in the region of the positioning station (A), the rollers (2) run over a running surface (5) and, in the region of the stations (B) and (C), run over a running surface (13), in such a manner that the rotation (R1) of the rollers in station (A) is opposite to that (R3) in stations (B) and (C), whereas the rollers in the region of station (D) rotate freely.

## Patentansprüche

1. Vorrichtung zum Säubern von Sprossen, die der Größe nach sortiert sind, mit einer Rollentransporteinrichtung zum Transportieren der Sprossen, wobei entlang der Rollentransporteinrichtung in deren Bewegungsrichtung eine Anzahl von Bearbeitungsstationen für die Sprossen angeordnet sind, **dadurch gekennzeichnet, dass** die Bearbeitungsstationen der Reihe nach gebildet werden von:
- einer Positionierstation (A), in der die Sprossen eine von zwei möglichen Positionen einnehmen;
- einer Abtaststation (B), die feststellt, welche der beiden möglichen Positionen die Sprosse angenommen hat und diese Information in einer Computereinheit (12) speichert;
- einer Schneidestation (C), in der die Sprossen mittels der gespeicherten Daten in der Computereinheit (12) geschnitten werden; und
- einer Auswurfstation (D), in der die Sprossen, deren Positionen nicht hinreichend genau bestimmt werden konnten, ausgeworfen werden.

2. Vorrichtung nach Anspruch 1, **dadurch gekennzeichnet, dass** die Positionierstation (A) durch einen Teil der Rollentransporteinrichtung (1) gebildet wird, wobei die individuellen Rollen (2) derart geformt sind, dass jeweils zwischen benachbarten Rollen eine Reihe von Aufnahmeräumen (4) gebildet wird, die jeweils eine Sprosse aufnehmen können, wobei die individuellen Rollen zum Rotieren gebracht werden, weshalb die aufgenommenen Sprossen in den Aufnahmeräumen anfangen werden, um ihre Längsachse zu rotieren, wodurch sie parallel zu den Rollen ausgerichtet werden, und wobei Mittel (6) oberhalb der Rollentransporteinrichtung angeordnet sind, um die Sprossen zu entfernen, die nicht durch die Aufnahmeräume aufgenommen wurden.

3. Vorrichtung nach Anspruch 2, **dadurch gekennzeichnet, dass** die Mittel (6) zum Entfernen der Sprossen, die nicht durch die Aufnahmeräume aufgenommen wurden, durch eine Reihe von rotierenden Scheiben (6) gebildet werden, wobei der Umfang der Scheiben sich in einiger Entfernung zum Umfang der Rollen befindet, nämlich in dem selben Bereich (5) zwischen den besagten Aufnahmeräumen (4).

4. Vorrichtung nach Anspruch 1, 2 oder 3, **dadurch gekennzeichnet, dass** die Abtaststation (B) ein Gehäuse umfasst, in dem sich in jedem Fall eine Anzahl von Rollen bewegt, die eine entsprechende Anzahl von Reihen mit Sprossen transportieren, in dem Gehäuse eine Kamera (11) angebracht ist, die eine Anzahl von Fotos von den Reihen mit Sprossen in dem Gehäuse aufnimmt, und die Kamera an eine Computereinheit (12) angeschlossen ist, die die Position der jeweiligen Sprosse anhand der erhaltenen Fotos bestimmt und sie speichert.

5. Vorrichtung nach Anspruch 4, **dadurch gekennzeichnet, dass** die Computereinheit (12) die Farbabweichung der jeweiligen Sprosse an beiden Enden aufnimmt und die Position der jeweiligen Sprosse durch Vergleich der Farbabweichungen an beiden Enden bestimmt.

6. Vorrichtung nach einem oder mehreren der vorherigen Ansprüche 1 bis 5, **dadurch gekennzeichnet, dass** die Schneidestation (C) eine Reihe von Rückhalteelementen (14) umfasst, um eine Reihe von Sprossen, die aus der Station (B) herauskommen, zurückzuhalten, in den besagten Aufnahmeräumen (4) eine Reihe von Messern (15, 15') vorhanden ist, wobei zwei vertikal verstellbare Messer für jeden Aufnahmeraum vorhanden sind, und die Messer in der Längsrichtung der Rollen (2) angeordnet und jeweils an ein Bedienelement (17, 17') angeschlossen sind, das durch die besagte Computereinheit (12) gesteuert wird.

7. Vorrichtung nach Anspruch 6, **dadurch gekennzeichnet, dass** jede Rolle (2) in jedem Bereich, in dem sich ein Aufnahmeraum (4) befindet, mit zwei sich über den Umfang erstreckenden engen Schlitzen (8) versehen ist, die jeweils in der vertikalen Bewegungsebene der Messer (15, 15') angeordnet sind, so dass das Messer teilweise in den entsprechenden Schlitz reinfahren kann, wenn es abgesenkt wird.

8. Vorrichtung nach Anspruch 7, **dadurch gekennzeichnet, dass** jeder Bereich der Rolle, der einen Aufnahmeraum umfasst, einen Abschnitt mit einem relativ kleinen Durchmesser aufweist, wobei der Durchmesser stark von dem Bereich (5) mit maximalem Durchmesser abnimmt, was zu relativ steilen Kantenneigungen (6) führt, zwischen denen sich eine flache im wesentlichen kegelförmig geformte Lauffläche (7) für die Sprosse befindet, und die Schlitze (8) sich im Übergang zwischen den steilen Kantenneigungen (6) und der Lauffläche (7) befinden.

9. Vorrichtung nach einem oder mehreren der vorherigen Ansprüche, **dadurch gekennzeichnet, dass** die Auswurfstation (D) eine Reihe von Düsen (2) für Druckluft aufweist, die Düsen stromabwärts der Schneidestation (C) in der Nähe des Wendepunktes der Rollentransporteinrichtung angeordnet sind, und jede Düse nahe an einen Aufnahmeraum angeordnet ist.

10. Vorrichtung nach einem oder mehreren der vorherigen Ansprüche, **dadurch gekennzeichnet, dass** in dem Bereich der Positionierstation (A) die Rollen (20) über eine Lauffläche (5) laufen und in dem Bereich der Stationen (B) und (C) über eine Lauffläche (13) laufen, so dass die Rotationsrichtung (R1) der Rollen in Station (A) entgegengesetzt zu der (R3) in den Stationen (B) und (C) ist, während die Rollen in dem Bereich der Station (D) frei rotieren.

## Revendications

1. Dispositif de nettoyage de choux de Bruxelles qui ont été triés en fonction de la taille comprenant un convoyeur à rouleau destiné à transférer les choux, le long duquel convoyeur à rouleau, dans sa direction de déplacement, un certain nombre de postes de traitement des choux sont agencés, **caractérisé en ce que** les postes de traitement sont constitués successivement par :
un poste de positionnement (A) dans lequel les choux prennent l'une de deux positions possibles ;
un poste de scrutation (B) qui détermine laquelle des deux positions possibles a pris le choux et mémorise cette information dans une unité informatique (12) ;
un poste de coupe (C) dans lequel les choux sont coupés en utilisant les données mémorisées dans l'unité informatique (12) ; et
un poste d'éjection (D) dans lequel les choux dont la position ne peut pas être déterminée d'une manière suffisamment précise sont éjectés.

2. Dispositif selon la revendication 1, **caractérisé en ce que** le poste de positionnement (A) est formé par une section du convoyeur à rouleau (1), les rouleaux individuels (2) étant profilés de telle manière que, dans chaque cas entre des rouleaux adjacents, il est formée une rangée d'espaces de réception (4) qui peuvent chacun recevoir un chou, les rouleaux individuels étant amenés à tourner, en résultat de quoi les choux reçus dans des espaces de réception commencent à tourner autour de leur axe le plus long, alignant ainsi ce dernier parallèlement aux rouleaux, des moyens (6) étant agencés au-dessus du convoyeur à rouleau afin d'éliminer les choux qui ne restent pas dans les espaces de réception.

3. Dispositif selon la revendication 2, **caractérisé en ce que** les moyens (6) destinés à éliminer les choux qui ne restent pas dans les espaces de réception sont formés par une rangée de disques tournants (6), la circonférence de chaque disque étant à une certaine distance de la circonférence externe des rouleaux, à savoir, dans la zone (5) de ceux-ci entre lesdits espaces de réception (4).

4. Dispositif selon la revendication 1, 2 ou 3, **caractérisé en ce que** le poste de scrutation (B) comprend un boîtier à travers lequel, dans chaque cas, il se déplace un certain nombre de rouleaux qui transportent un nombre correspondant de rangées de choux, boîtier dans lequel est assemblée une caméra (11) qui enregistre un certain nombre d'images des rangées de choux présentes dans le boîtier, la caméra est reliée à une unité informatique (12) qui détermine et mémorise la position de chaque chou en utilisant les images obtenues.

5. Dispositif selon la revendication 4, **caractérisé en ce que** l'unité informatique (12) enregistre les écarts de couleur de chaque chou aux deux extrémités de celui-ci et détermine la position du chou respectif en comparant l'écart de couleur aux deux extrémités.

6. Dispositif selon une ou plusieurs des revendications 1 à 5 précédentes, **caractérisé en ce que** le poste de coupe (C) comprend une rangée d'éléments de retenue (14) destinés à retenir une rangée de choux sortant du poste (B) dans lesdits espaces de réception (4), **en ce qu'**une rangée de couteaux (15, 15') est présente, deux couteaux pouvant être déplacés verticalement étant présents pour chaque espace de réception, lesquels couteaux sont espacés l'un de l'autre dans la direction longitudinale des rouleaux (2) et sont reliés chacun à un élément d'activation (17, 17') qui est commandé par ladite unité informatique (12).

7. Dispositif selon la revendication 6, **caractérisé en ce que** chaque rouleau (2) dans chaque zone qui forme un espace de réception (4) comporte deux fentes étroites (8) s'étendant au-dessus de la circonférence, chacune d'elle est située dans le plan vertical de déplacement d'un couteau (15, 15'), de telle sorte que le couteau peut se déplacer partiellement dans la fente respective lorsqu'il est descendu.

8. Dispositif selon la revendication 7, **caractérisé en ce que** chaque zone du rouleau qui forme un espace de réception comprend une section avec un diamètre relativement faible, le diamètre diminuant fortement à partir des zones (5) avec un diamètre maximum, conduisant à des pentes relativement profondes (6), entre lesquelles est agencée une surface d'appui sensiblement en forme de coupelle plate (7) pour le chou, et les fentes (8) étant situées au niveau de la transition entre les pentes profondes (6) et la surface d'appui (7).

9. Dispositif selon une ou plusieurs des revendications précédentes, **caractérisé en ce que** le poste d'éjection (D) comprend une rangée d'injecteurs (2) pour de l'air comprimé, lesquels injecteurs sont agencés en aval du poste de coupe (C), à proximité du point de rotation du convoyeur à rouleau, et chaque injecteur est agencé à proximité d'un espace de réception.

10. Dispositif selon une ou plusieurs des revendications précédentes, **caractérisé en ce que**, dans la zone du poste de positionnement (A), les rouleaux (2) s'étendent sur une surface mobile (5) et, dans la zone des postes (B) et (C), ils s'étendent sur une surface mobile (13), de telle manière que la rotation (R1) des rouleaux sur le poste (A) est opposée à celle (R3) sur les postes (B) et (C), alors que les rouleaux dans la zone du poste (D) tournent librement.
